(19) Europäisches Patentamt
European Patent Office
Office européen des brevets

(11) Numéro de publication: **0 295 983 B1**

(12) **FASCICULE DE BREVET EUROPEEN**

(45) Date de publication de fascicule du brevet: **13.01.93**

(51) Int. Cl.$^5$: **C07F 7/18**

(21) Numéro de dépôt: **88401262.6**

(22) Date de dépôt: **25.05.88**

# (54) Nouveaux produits de condensation de silanols, leurs préparation et applications.

(30) Priorité: **26.05.87 FR 8707371**
**07.08.87 FR 8711262**

(43) Date de publication de la demande:
**21.12.88 Bulletin 88/51**

(45) Mention de la délivrance du brevet:
**13.01.93 Bulletin 93/02**

(84) Etats contractants désignés:
**DE GB IT NL**

(56) Documents cités:

**CHEMICAL ABSTRACTS, vol. 77, no. 1, 3 juillet 1972, page 512, résumé no. 5771b, Columbus, Ohio, US; H. BUCHWALD et al.: "Reaction of halosilanes with N-protected amino acids", & J. ORGANOMETAL. CHEM. 1972, 37(1), C1-C3**

(73) Titulaire: **EXSYMOL S.A.M.**
**2 Boulevard Charles III**
**MC-98000 Monaco(MC)**

(72) Inventeur: **Gueyne, Jean**
**Périgord 1, 6 Lacets Saint Léon**
**Monte-Carlo(MC)**
Inventeur: **Seguin, Marie-Christine**
**Pérogord 1, 6 Lacets Saint Léon**
**Monte-Carlo(MC)**

(74) Mandataire: **Bertrand, Didier et al**
**c/o S.A. FEDIT-LORIOT & AUTRES CONSEILS EN PROPRIETE INDUSTRIELLE 38, Avenue Hoche**
**F-75008 Paris(FR)**

**EP 0 295 983 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne une nouvelle série de produits de condensation de silanols et de leurs dérivés ; elle se rapporte, plus particulièrement, à de tels produits, formés par la condensation de silanols avec des composés organiques,porteurs d'au moins une fonction carboxylique, qui possèdent, en outre, un ou plusieurs hydroxyles et un ou plusieurs groupes amino. Ils peuvent comporter des groupes siloxaniques dans leur molécule. L'invention concerne aussi des procédés de préparation de ces produits de condensation, ainsi que leurs applications, notamment médicales, cosmétiques, rhéologiques ou comme adjuvants de matières plastiques.

L'utilité des silanols, des siloxanes et de leurs différents dérivés est bien connue. On sait,par exemple, que des alkyl silanols, tels que le méthyl silanetriol, et leurs salicylates, exercent sur les tissus conjonctifs une action très bénéfique ; ils empêchent la sclérose, stimulent la régénération du tissu et assurent la stabilisation de celui-ci. D'autre part, des polysiloxanes organiques sont employés comme additifs de matières plastiques dont ils facilitent le démoulage ; on en utilise également pour la lubrification de fibres organiques et comme émulsifiants et moussants.

La présente invention apporte un progrès par rapport à la technique connue des composés organiques du silicium, en ce qu'elle vise des produits de condensation bien stables à la chaleur, pouvant être manipulés, transportés et conservés à l'état solide ou huileux et non obligatoirement en solution comme le sont des produits mentionnés plus haut. Il est possible d'avoir, suivant l'invention, des composés qui s'hydrolysent ou s'alcoolisent en solution, donnant ainsi des produits à l'état naissant, particulièrement actifs. Des produits très efficaces, à action thérapeutique et cosmétique, sont obtenus suivant l'invention avec des aminoacides hydroxylés.

Le nouveau produit, suivant l'invention, est un produit de condensation d'un composé organique du silicium avec un acide carboxylique, ou son sel métallique, portant dans sa molécule un ou plusieurs atomes de Si, au moins une fonction amine et un ou plusieurs hydroxyles ou dérivés métalliques d'hydroxyles, le silicium étant lié au groupe carboxylique, caractérisé en ce que le produit renferme en outre un groupe oxa lié à un atome de silicium.

Un ou les deux groupements organiques de ces produits peuvent être cycliques ou former ensemble un cycle commun.

Les produits suivant l'invention peuvent être représentés par la formule générale :

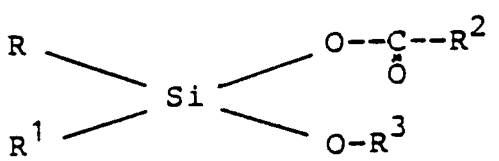 ..... (1)

où les radicaux R et $R^1$, semblables ou différents, sont des radicaux hydrocarbonés ou oxyhydrocarbonés, aliphatiques ou aryliques ; $R^2$ et $R^3$, semblables ou différents entre eux, et différents de chacun des R et $R^1$, sont des groupements organiques linéaires ou cycliques, dont au moins un porte un ou plusieurs groupes $-NH_2$ ou $=NH$.

R et $R^1$ peuvent être notamment des alkyles ou des alcényles, de préférence en $C_1$ à $C_{18}$, des aryles benzéniques ou naphtaléniques pouvant porter des substituants, en particulier alkyles, halogènes, hydroxyles, alcoxyles ou acyles ; ils peuvent être des alkoxy en $C_1$ à $C_8$, des aryloxy benzéniques ou naphtaléniques, éventuellement substitués comme indiqué ci-dessus, ou bien des cycloalkyles ou cycloalcényles en $C_4$ à $C_8$.

De même $R^2$ et $R^3$ peuvent être des alkyles ou alcényles en $C_1$ à $C_{18}$, des aryles, alkoxy, aryloxy, cycloalkyles ou cycloalcényles, définis comme plus haut,mais différents de R et $R^1$.

$R^2$ et $R^3$ peuvent être liés l'un à l'autre, auquel cas ils forment un cycle avec la partie

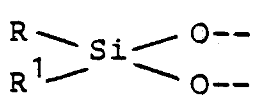

de la molécule.

Un cas important est celui où $R^2$ et $R^3$ forment en commun un cycle, par exemple à 5 ou 6 éléments.

Par le résumé 5771b, dans Chem.Abst. Vol.7, page 512, de 1972, on connaît certains produits de

condensation d'halogénosilanes avec des amino-acides dont le groupe amino est protégé. Ces composés ne possèdent pas de $NH_2$ ou -NH susceptible de réagir, comme c'est possible suivant la présente invention; en outre, ils ne portent pas de groupe oxa ce qui les distingue encore davantage des produits de l'invention. Leur préparation a lieu à partir d'halogéno-silanes, tandis que l'on utilise des silanols ou leurs dérivés dans le procédé selon l'invention.

Lorsque les produits selon l'invention sont destinés à des utilisations biologiques, notamment comme médicaments ou dans des cosmétiques, il est de beaucoup préférable qu'un seul des radicaux R et $R^1$ soit hydrocarboné, soit alkyle, alcényle, ou aryle, le second étant de nature différente, en particulier alkoxy, alcénoxy, aryloxy, hydroxy-alkyle ou amino. Il est en effet avéré que des silanols et leurs dérivés, dont l'atome de silicium porte plus d'un radical hydrocarboné,relié au Si par une liaison C-Si, ont une efficacité moins bonne que celle des composés possédant une seule liaison de ce type.

C'est la raison pour laquelle ceux des produits suivant l'invention, qui sont destinés aux applications pharmaceutiques, répondent de préférence à la formule (1),dans laquelle R peut être - comme indiqué plus haut - un radical hydrocarboné ou oxyhydrocarboné, tandis que $R^1$ n'est jamais un radical hydrocarboné. Autrement dit, dans cette forme de l'invention, préférée pour les produits pharmaceutiques, la partie de la molécule

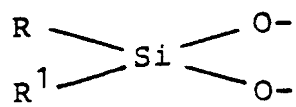

dérive d'un mono- alkyl-, alcényl- ou aryl- (R) silane di- ou tri-ol, $R^1$ pouvant être un groupe du type $R^4O$- (liaison -O-Si) où $R^4$ est un alkyle, alcényle, aryle, cycloalkyle, hydrogène, éther ou polyéther éventuellement hydroxylés, ce groupe $R^4O$ pouvant être bloqué, par exemple par une molécule d'acide, $R^1$ peut, d'autre part, être constitué par une fonction amine ou amide, éventuellement bloquée.

Voici, à titre d'exemples purement illustratifs, les formules de la partie

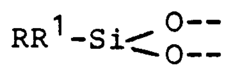

de quelques uns des produits de condensation suivant l'invention, particulièrement recommandables pour l'utilisation pharmaceutique:

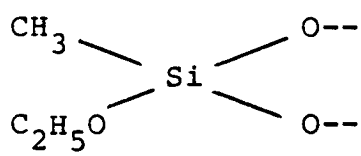

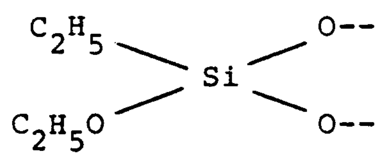

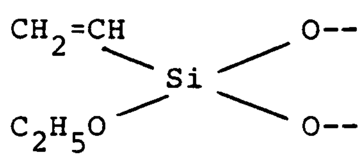

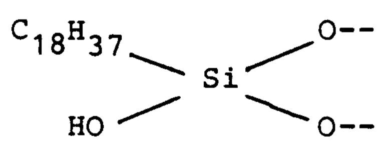

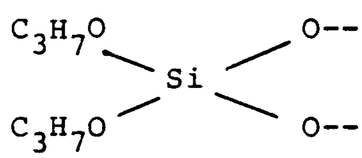

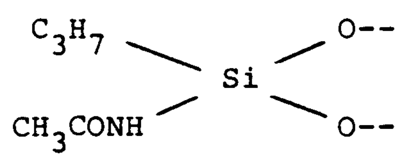

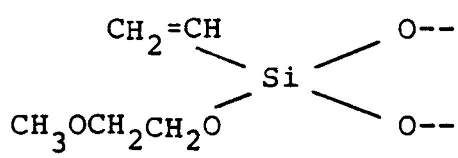

Cette illustration n'a, bien entendu, aucun caractère limitatif.

Des produits suivant l'invention, particulièrement intéressants, répondent à la formule générale :

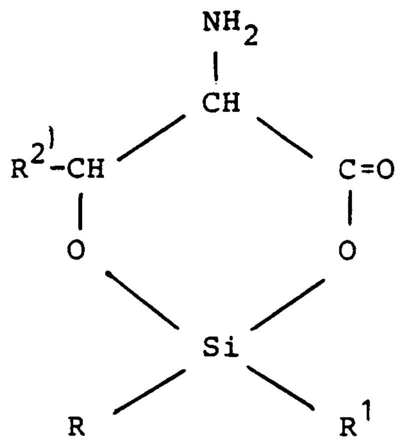

où chacun des R et $R^1$, semblables ou différents, est un alkyle en $C_1$ à $C_4$ ou un groupe alcoxy en $C_1$ à $C_4$, tandis que $R^{2'}$ est H ou un alkyle en $C_1$ à $C_4$.

Les produits de condensation suivant l'invention peuvent être préparés par l'action d'un silane, silanol ou siloxane, ayant au moins deux groupes réactifs, avec un acide carboxylique portant un hydroxyle et un groupe amino, la réaction ayant lieu au sein d'un solvant organique anhydre, en présence d'un neutralisant. La préparation est terminée par l'élimination du solvant à l'ébullition.

Un autre procédé, permettant en général l'obtention de rendements meilleurs, consiste à faire réagir les groupes actifs du composé de Si avec un dérivé métallique de l'acide carboxylique susindiqué.

Les silanes à au moins deux groupes réactifs sont notamment des di- et tri-halogénures de respectivement di- et mono- hydrocarbyl silicium, soit $R_2SiX_2$ et $RSiX_3$, R étant un radical hydrocarboné et X un halogène. De tels silanes sont par exemple : $(CH_3)_2SiCl_2$ et $CH_3SiCl_3$. Toutefois, les composés dihalogénés sont de beaucoup plus préférés, à cause des complications ultérieures, à savoir la polymérisation réticulante, que risque de provoquer le troisième halogène.

Les siloxanes, utilisables dans le procédé selon l'invention, sont les organo-silicium des types $R'_2\,SiQ_2$ et $R'SiQ_3$, $R'$ étant un radical hydrocarboné ou oxy-hydrocarboné, comme par exemple $-CH_3$ ou $CH_3O$-, alors que Q est -OH ou -OR, R désignant, comme plus haut, un radical hydrocarboné. Des exemples de tels siloxanes sont, sans aucune limitation :

$(CH_3)_2Si(OH)_2$ ; $(C_2H_5)_2Si(OCH_3)_2$ ; $C_6H_5$-$Si(OC_2H_5)_3$ ; $C_4H_9O$-$Si(OH)_3$ ; $Si(OC_2H_5)_4$ ; $C_2H_5$-$Si(OH)_3$ ;

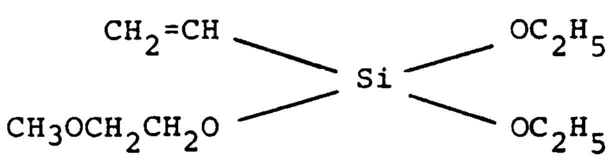

et similaires

Les composés, préférés pour le procédé de l'invention, sont ceux dont R est un alkyle inférieur ($C_1$ à $C_4$), conduisant à la formation de l'alcool correspondant, facilement séparable par distillation.

En tant qu'acides carboxyliques,à condenser avec le siloxane, on peut employer différents acides aliphatiques ou aryliques, éventuellement diacides, porteurs de fonctions OH et $NH_2$ ou NH.

Ce sont en particulier : sérine, di-sérine, thréonine, hydroxyproline, tyrosine, caséine ou acide amino phényl lactique.

En tant qu'illustration non limitative, voici deux schémas donnant une idée de la réaction de condensation dans le cas de l'invention :

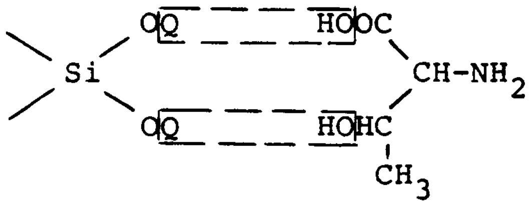

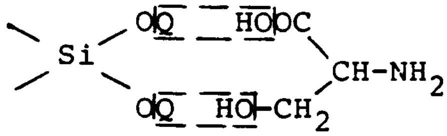

En ce qui concerne les solvants organiques, anhydres, employés dans la préparation des produits de condensation suivant l'invention, ils sont choisis parmi les liquides dissolvant le composé silicié et l'acide utilisés, et - de préférence - bouillant à des températures qui ne dépassent pas environ 150 °C. Ce sont, bien entendu, des liquides ne réagissant pas avec les réactifs mis en présence. Ainsi peut-on employer, selon les cas, des hydrocarbures aliphatiques surtout en $C_6$ à $C_{12}$, des aromatiques comme benzène, toluène,xylène, etc., des solvants chlorés, des terpènes, des éthers comme dioxane, le tétrahydrofuranne, etc. Il est fort pratique d'employer, comme solvant, un silane ou silanol, en particulier celui là même que l'on veut faire réagir .Comme il est indiqué de terminer la réaction par un chauffage, de préférence entre 50 ° et 100 °C, ce chauffage sert en même temps à l'élimination du solvant, et il est effectué sous une pression, éventuellement réduite, sous laquelle le solvant bout à la température adéquate.

Les neutralisants sont bien connus dans la technique chimique, il n'y a donc pas lieu de les citer ici ; on rappelle seulement que diverses amines, comme par exemple les triméthylamine, dibutylamine ou pyridine sont utilisables dans le procédé suivant l'invention.

L'invention est illustrée par les exemples non limitatifs qui suivent.

EXEMPLE 1

Condensation du sel de sodium de la sérine avec le di-chloro diméthyl silane

On procède d'abord à la préparation du dérivé sodique de la sérine par l'action de l'éthanolate de Na. Pour cela 0,2 atome de Na, soit 4,6g, est mis à réagir avec 200ml d'éthanol absolu, sur un bain de glace ; lorsque tout le sodium est dissous, on retire la solution d'éthanolate de Na obtenu du bain de glace, et on lui ajoute 0,1 mole ou 10,5 g de sérine. Après 1/2 heure apparaît un précipité du dérivé sodique. On fait alors distiller l'éthanol à sec de façon à obtenir une poudre blanche, formée par le sel de Na de la sérine.

Cette poudre est mise en suspension dans du chloroforme, puis on y ajoute 0,1 mol, c'est-à-dire 12,9g de $Cl_2Si(CH_3)_2$ et l'on porte au reflux pendant 24 heures, ce qui produit la réaction:

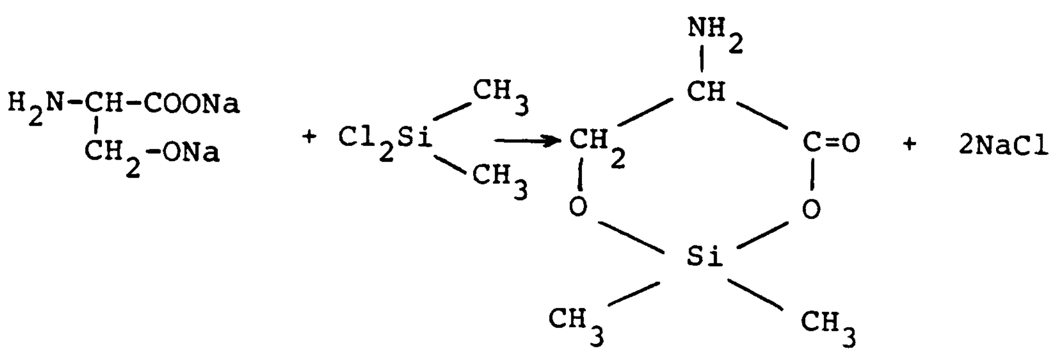

Le condensat est obtenu avec un rendement de 97%,par rapport à la sérine mise en oeuvre, après séparation par filtration du précipité de NaCl et son rinçage au chloroforme. Le produit solide, ainsi préparé,présente les caractéristiques ci-après.

| | IR | | RMN $^1H$ | |
|---|---|---|---|---|
| C=O | 1720 $cm^{-1}$ | | $CH_3$-Si | 0,38ppm singulet |
| $CH_3$-Si | 800 $cm^{-1}$ | 1260 $cm^{-1}$ | CH-N | 4,52ppm triplet |
| $NH_2$ | 3220 $cm^{-1}$ | | $CH_2$-O | 3,20ppm doublet |
| CH | 2900 $cm^{-1}$ | | $NH_2$ | 7,25ppm multiplet |

EXEMPLE 2

Condensation de la sérine avec du $Cl_2Si(CH_3)_2$, en présence d'un neutralisant

0,1 mole de sérine est mise en suspension dans 200 ml de $CH_2Cl_2$ auxquels est ajoutée 0,2 mole de triéthylamine. On ajoute ensuite, goutte-à-goutte, 0,11 mole de dichlorodiméthylsilane. Le mélange est porté au reflux du solvant pendant 12 h, puis on le laisse revenir à température ambiante. On filtre le mélange réactionnel, on lave le précipité formé avec du dichlorométhane, et on le sèche sous pression réduite. Le produit solide,obtenu avec un rendement de 71% sur la sérine, correspond au siloxane cyclique selon le schéma réactionnel :

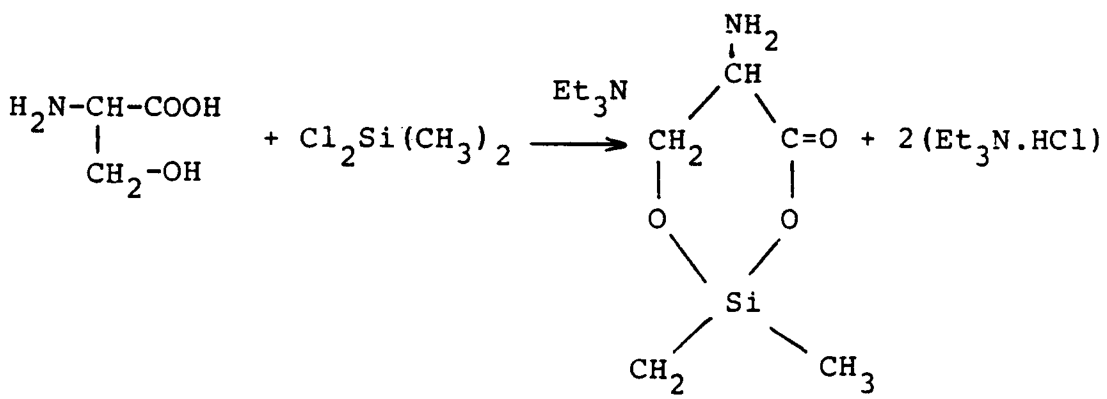


Les caractéristiques de ce condensat sont pratiquement les mêmes que pour celui de l'exemple 1 :

| | IR | RMN $^1H$ | |
|---|---|---|---|
| C=O | 1730 $cm^{-1}$ | $CH_3$-Si | 0,35 ppm singulet |
| $CH_3$-Si | 815 $cm^{-1}$, 1260 $cm^{-1}$ | CH-N | 4,52 ppm triplet |
| $NH_2$ | 3200 $cm^{-1}$ | $CH_2$-O | 3,25 ppm doublet |
| | | $NH_2$ | 7,3 ppm multiplet |

EXEMPLE 3

Produit de condensation d'un monoalkyl trialcoxy silane avec un amino acide alcool dont la fonction $NH_2$ est protégée par acétylation.

Suivant le mode opératoire de l'exemple 2, on fait réagir le mono-méthyl triéthoxy silane avec l'acétyl sérine. La réaction peut s'écrire :

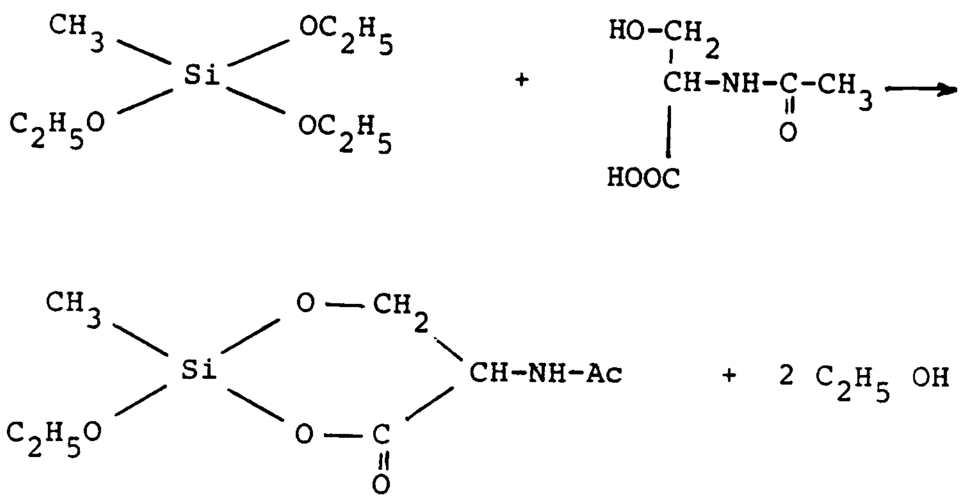

Produit solide.

EXEMPLE 4

Autre produit de condensation,suivant l'invention, aminé. Préparation selon l'exemple 3, avec de l'acétyl-thréonine à la place de la sérine :

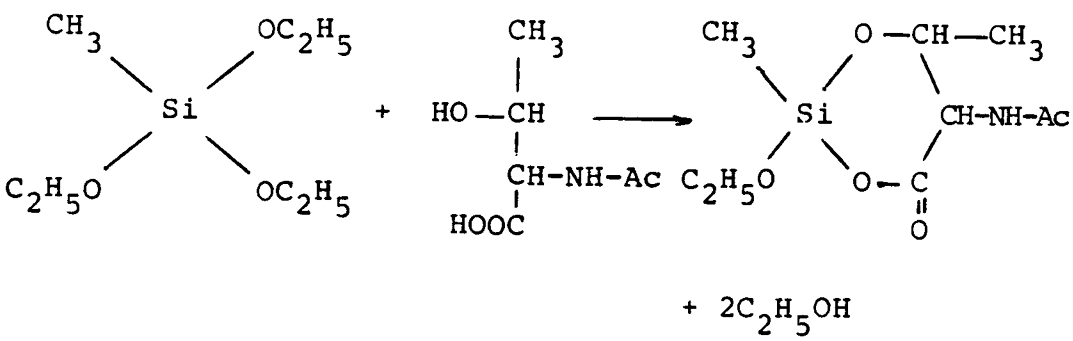

EXEMPLE 5

Condensation d'un silanol avec un amino-acide aromatique à fonction phénol.
A une solution de 1 mole d'acétyl-tyrosine (233 g)

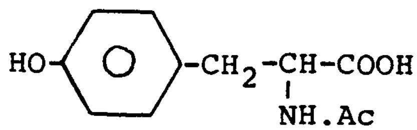

dans 500 ml de benzène, on ajoute 100 ml de pyridine, 100 ml d'acétate d'éthyle et 1,5 mole de $CH_3$-Si-($OC_2H_5$)$_3$ soit 267g (300 ml). Le solvant est distillé lentement sous la pression atmosphérique. Puis,par distillation sous vide, on récupère 338 g d'une huile que l'on dissout dans de l'acétate d'éthyle ; la solution est passée à travers une colonne de silice qui est ensuite éluée avec un mélange de 60 vol. d'acétate d'éthyle pour 40 vol. d'éther éthylique. L'évaporation de l'éluat laisse un solide jaune aux caractéristiques suivantes :

P.F. ≃ 62°C IR : 3300-2900-1730-1630-1050-920-780

| | | | |
|---|---|---|---|
| RMN : | 6,8 ppm | multiplet | 4H |
| | 4,5 " | " | 1H |
| | 2,3 " | " | 2H |
| | 1,9 " | singulet | 3H |
| | 0,3 " | " | 3H |

La formule admise pour ce composé est :

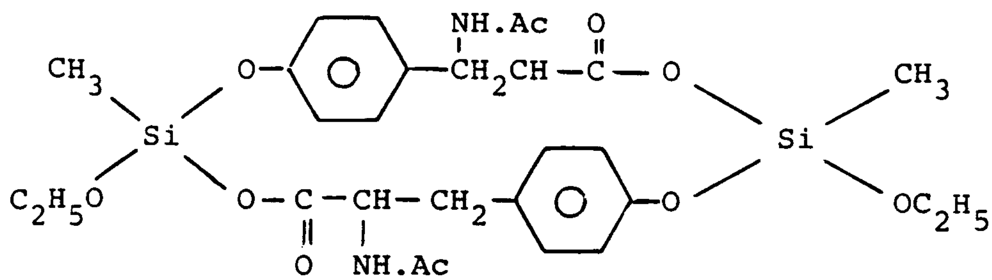

EXEMPLE 6

En suivant la technique de l'exemple 1, on a effectué une condensation selon la réaction :

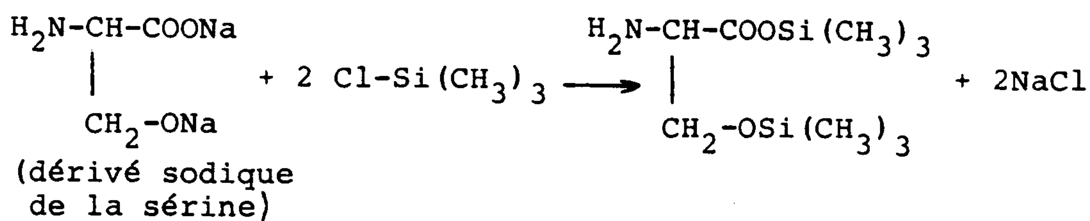

(dérivé sodique de la sérine)

Le produit solide, obtenu avec un rendement de 96%, présente les caractéristiques suivantes.

| | IR | RMN $^{1}H$ | |
|---|---|---|---|
| C=O | 1730 $cm^{-1}$ | $(CH_3)_3$-Si | 0,39 ppm, singulet intégration relative 18 |
| Si-O-C | 1090 $cm^{-1}$ | $NH_2$ | 7,2 ppm, multiplet intégration relative 2 |
| $CH_3$-Si | 800 $cm^{-1}$, 1250 $cm^{-1}$ | CH-N | 4,5 ppm, triplet intégration relative 1 |
| $NH_2$ | 3200 $cm^{-1}$ | $CH_2$-O | 3,2 ppm, doublet intégration relative 2 |

On voit que le procédé de l'invention permet d'obtenir le composé voulu à groupe $NH_2$ libre, avec très bon rendement.

EXEMPLE 7

De façon analogue à celle de l'exemple1, on effectue la condensation

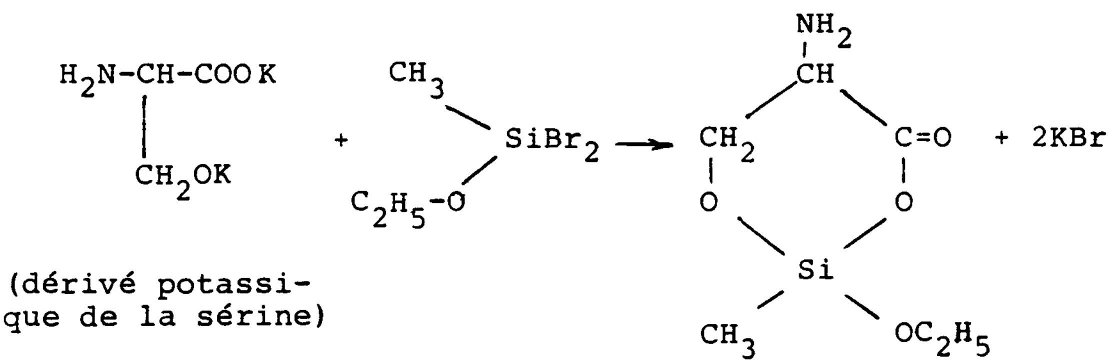

(dérivé potassique de la sérine)

Le nouveau composé, solide, présente les caractéristiques suivantes :

| | IR |
|---|---|
| C=O | 1730 $cm^{-1}$ |
| $CH_3$-Si | 780 $cm^{-1}$, 1265 $cm^{-1}$ |
| $NH_2$ | 3200 $cm^{-1}$ |
| CH- | 2950 $cm^{-1}$ |

| | RMN |
|---|---|
| $CH_3$-Si | 0,35 ppm singulet |
| CH-N | 4,52 ppm triplet |
| $CH_2$-O | 3,20 ppm doublet |
| Et-O $CH_3$ | 1,25 ppm triplet |
| $CH_2$ | 3,75 ppm quadruplet |
| $NH_2$ | 7,40 ppm |

EXEMPLE 8

Condensation de la thréonine avec un silanol

Le mode opératoire de l'exemple 1 est appliqué à la réaction :

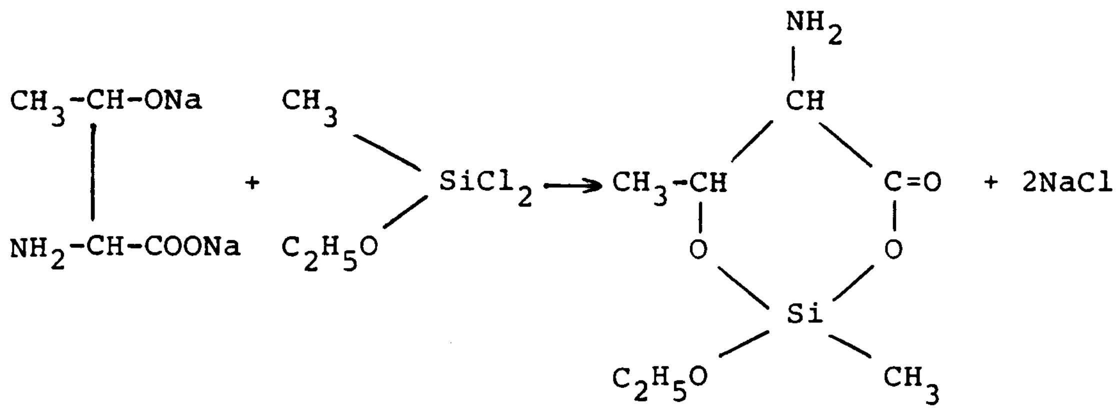

Le produit, obtenu avec un rendement de 95%, est solide et présente les caractéristiques suivantes :

| IR | | RMN | |
|---|---|---|---|
| C=O | 1720 $cm^{-1}$ | $CH_3$-CH | 1,5 ppm doublet |
| $CH_3$-Si | 800 $cm^{-1}$, 1260 $cm^{-1}$ | Me-CH-C (O) | 3,10ppm multiplet (8 raies) |
| $NH_2$ | 3200 $cm^{-1}$ | CH-N | 4,42 ppm doublet |
| C-H | 2900 $cm^{-1}$ | $CH_3$-$CH_2$-O | 1,25 ppm triplet $CH_3$<br>3,75 ppm quatrupletCH |
| | | $CH_3$-Si | 0,35 ppm singulet |

EXEMPLE 9

La technique des exemples précédents est appliquée à la condensation du dérivé sodique de la thréonine avec du dichloro diméthyl silane.

On réalise ainsi la réaction :

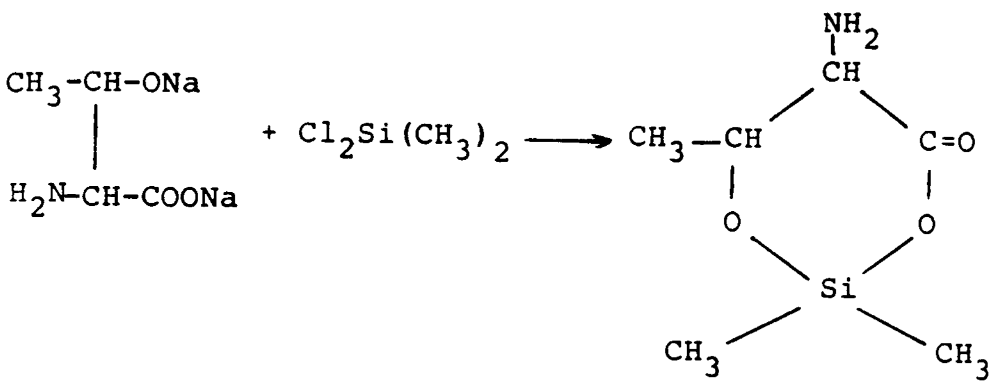

Le produit formé, solide, est obtenu avec un rendement de 96% ; il présente les caractéristiques :

| IR | | RMN | |
|---|---|---|---|
| C=O | 1750 $cm^{-1}$ | $CH_3$-CH | 1,5ppm doublet |
| $CH_3$-Si | 790 $cm^{-1}$, 1250 $cm^{-1}$ | Me-CH (O) | 3,05 ppm multiplet |
| $NH_2$ | 3200 $cm^{-1}$ | CH-N | 4,42 ppm doublet |
| CH | 2900 $cm^{-1}$ | $CH_3$-Si | 0,38 ppm singulet |

**Revendications**

1. Produit de condensation d'un composé organique du silicium avec un acide carboxylique, ou son sel métallique, portant dans sa molécule un ou plusieurs atomes de Si, au moins une fonction amine et un ou plusieurs hydroxyles ou dérivés métalliques d'hydroxyles, le silicium étant lié au groupe carboxylique, caractérisé en ce que le produit renferme en outre un groupe oxa lié à un atome de silicium.

2. Produit suivant la revendication 1, caractérisé en ce que sa molécule comporte deux atomes de Si, dont un lié au groupe carboxylique et le second au groupe oxa.

3. Produit suivant la revendication 1, caractérisé en ce qu'il répond à la formule

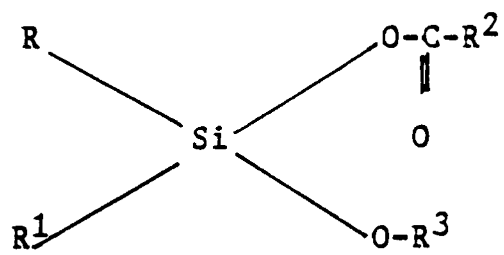

où R et $R^1$, semblables ou différents, sont des radicaus hydrocarbonés ou oxyhydrocarbonés, aliphatiques ou aryliques, tandis que $R^2$ et $R^3$, semblables ou différents entre eus, sont des alkyles ou alcenyles en $C_1$ à $C_{18}$, des aryles, alkoxy, aryloxy, cycloalkyles ou cycloalcényles en $C_4$ à $C_8$, différents des R et $R_1$, $R^2$ et $R^3$ pouvant former un cycle avec la partie de la molécule

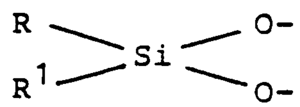

4. Produit suivant la revendication 3, caractérisé en ce que chacun des radicaux R et $R^1$ est un alkyle ou alcényle en $C_1$ à $C_{18}$, un aryle benzénique ou naphtalénique, pouvant porter des substituants, en particulier halogènes, hydroxyles, alkoxyles ou acyles.

5. Produit suivant la revendication 3, caractérisé en ce qu'au moins un des radicaux R et $R^1$ est un alkoxy en $C_1$ à $C_8$ , ou bien un aryloxy benzénique ou naphtalénique pouvant porter des substituants.

6. Produit suivant la revendication 3, caractérisé en ce qu'un ou les deux radicaux R et $R^1$ sont de cycloalkyles ou cycloalcényles en $C_4$ à $C_8$.

7. Produit suivant une des revendications 3 à 6, caractérisé en ce que $R^2$ et $R^3$, semblables ou différents, sont alkyles ou alcényles en $C_1$ à $C_{18}$, aryles, alkoxys, aryloxys, cycloalkyles ou cycloalcényles, différents de R et $R^1$.

8. Produit suivant une des revendications 3 à 7, caractérisé par la formule :

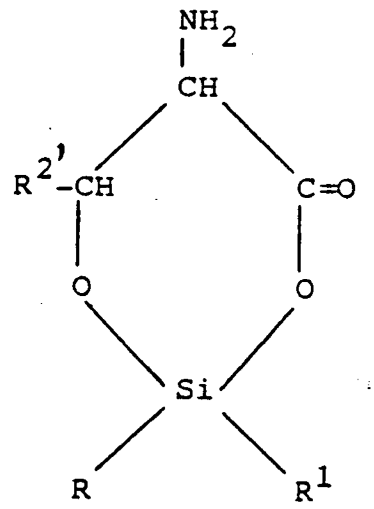

dans laquelle chacun des R et $R^1$, semblables ou différents, est un alkyle en $C_1$ à $C_4$ ou un alcoxy en $C_1$ à $C_4$, $R^{2'}$ étant H ou un alkyle en $C_1$ à $C_4$.

9. Produit suivant la revendication 8, caractérisé en ce qu'il provient de la condensation de $CH_3Si(OC_2H_5)_3$ avec de la sérine, la disérine ou la thréonine.

10. Procédé de préparation d'un produit de condensation suivant une des revendications 1 à 9, caractérisé en ce qu'un silanol ou son dérivé et un acide carboxylique portant un ou plusieurs OH et $NH_2$, sont dissous ensemble dans un solvant organique, anhydre, additionné d'un neutralisant, et que le solvant est ensuite éliminé à chaud.

11. Procédé suivant la revendication 10, caractérisé en ce que le solvant bout à une température ne dépassant pas 150 ° C, son élimination par évaporation est effectuée entre 50 ° et 100 ° C, le donneur de protons étant une amine, en particulier pyridine.

12. Procédé de préparation d'un produit suivant une des revendications 1 à 9, caractérisé en ce qu'un composé organique du silicium, portant deux groupes ou atomes échangeables avec des cations, est chauffé au sein d'un liquide organique, anhydre, avec un sel métallique d'un acide carboxylique portant au moins un OH et au moins un $NH_2$.

13. Procédé suivant la revendication 12, caractérisé en ce que l'acide carboxylique est sous la forme d'un sel de métal alcalin de sérine, de disérine, de thréonine ou de tyrosine.

**Claims**

1. Condensation product of an organic compound of silicon with a carboxylic acid, or its metallic salt, bearing in its molecule one or several atoms of Si, at least an amino group and one or several hydroxyls or metallic hydroxyl derivatives, the silicon being bonded to the carboxylic group, characterized in that the product further includes a group oxa bonded to an atom of silicon.

2. Product according to claim 1, characterized in that its molecule comprises two atoms of silicon, one of which is bonded to the carboxylic group and the other to the group oxa.

3. Product according to claim 1, characterized in that it corresponds to the formula

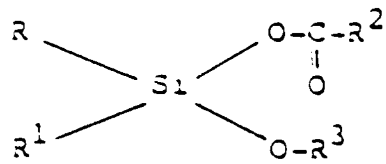

where R and $R^1$, the same or different, are aliphatic or aryl hydrocarbon or oxyhydrocarbon radicals, while $R^2$ and $R^3$, the same or different between themselves, are $C_1$ to $C_{18}$ alkyl or alkenyls, aryls, alkoxys, aryloxys, cycloalkyls or cycloalkenyls from $C_4$ to $C_8$, different from R and $R^1$, wherein $R^2$ and $R^3$ can form a ring with the portion of molecule

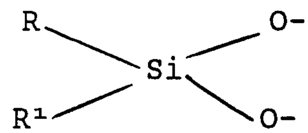

4. Product according to claim 3, characterized in that each of the radicals R and $R^1$ is a $C_1$ to $C_{18}$ alkyl or alkenyl, a benzene or naphtalene aryl which can carry substituents in particular halogens, hydroxyls, alkoxyls or acyls.

5. Product according to claim 3, characterized in that at least one of the radicals R and $R^1$ is a $C_1$ to $C_8$ alkoxy or a benzene or naphthalene aryloxy which can carry substituents.

6. Product according to claim 3, characterized in that one of or the two radicals R and $R^1$ is/are $C_4$ to $C_8$ cycloalkyls or cycloalkenyls.

7. Product according to any of claims 3 to 6, characterized in that $R^2$ and $R^3$ the same or different, are $C_1$ to $C_{18}$ alkyls or alkenyls, aryls, alkoxys, aryloxys, cycloalkyls or cycloalkenyls different from R and $R^1$.

8. Product according to anyone of claims 3 to 7, characterised by the formula :

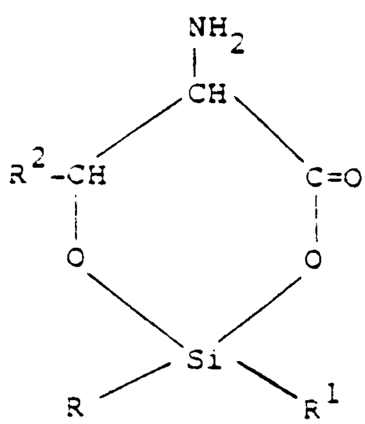

in which each of R and $R^1$, the same or different, is a $C_1$ to $C_4$ alkyl or a $C_1$ to $C_4$ alkoxy, $R^{2'}$ being H or a $C_1$ to $C_4$ alkyl.

9. Product according to claim 8, characterised in that it is derived from the condensation of $CH_3Si$-

$(OC_2H_5)_3$ with serine, diserine or threonine.

**10.** Process of preparation of a condensation product according to any of claims 1 to 9, characterised in that a silanol or its derivative and a carboxylic acid carrying one or more OH and $NH_2$ are dissolved together in an anhydrous organic solvent, to which a neutraliser is added and that the solvent is then eliminated by heating.

**11.** Process according to claim 10, characterised in that the solvent boils at a temperature not exceeding 150 ° C, its elimination by evaporation is effected between 50 ° C and 100 ° C, the proton donor being an amine, particularly pyridine.

**12.** Process of preparation of a product according to any of claims 1 to 9, characterised in that an organic silicon compound carrying two groups or atoms exchangeable with cations is heated in an anhydrous organic liquid with a metal salt of a carboxylic acid carrying at least one OH and at least one NH.

**13.** Process according to claim 12, characterised in that the carboxylic acid is in the form of an alkali metal salt of serine, diserine, threonine or tyrosine.

**Patentansprüche**

**1.** Kondensationsprodukt einer organischen Siliziumverbindung mit einer Carbonsäure oder ihrem Metallsalz, die in ihrem Molekül ein oder mehrere Si-Atome, wenigstens eine Aminfunktion und ein oder mehrere Hydroxylgruppen oder Metallderivate von Hydroxylgruppen aufweist, wobei das Silizium an die Carboxylgruppe gebunden ist, dadurch gekennzeichnet, dass das Produkt weiterhin eine an ein Siliziumatom gebundene Oxagruppe aufweist.

**2.** Produkt nach Anspruch 1, dadurch gekennzeichnet, dass das Molekül zwei Si-Atome aufweist, von denen das eine an die Carboxylgruppe gebunden ist und das zweite an die Oxagruppe.

**3.** Produkt nach Anspruch 1, dadurch gekennzeichnet, dass es der Formel entspricht,

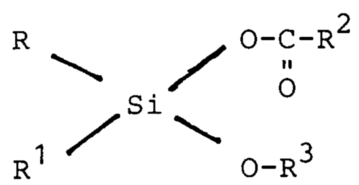

worin R und $R^1$, gleich oder verschieden, aliphatische oder aromatische Kohlenwasserstoff- oder Oxykohlenwasserstoffreste sind, während $R^2$ und $R^3$, gleich oder untereinander verschieden, Alkyle oder Alkenyle von $C_1$ bis $C_{18}$ sind, sowie Aryle, Alkoxy, Aryloxy, Cycloalkyle oder Cycloalkenyle von $C_4$ bis $C_8$, die von R und $R_1$ verschieden sind, wobei $R^2$ und $R^3$ mit dem Teil des Moleküls

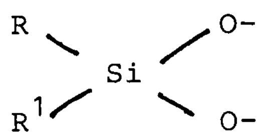

einen Zyklus bilden können.

**4.** Produkt nach Anspruch 3, dadurch gekennzeichnet, dass jeder der Reste R und $R^1$ ein Alkyl oder Alkenyl von $C_1$ bis $C_{18}$, ein Benzol- oder Naphthalinaryl, das Substituenten aufweisen kann, insbesondere Halogene, Hydroxyle, Alkoxyle oder Acyle, ist.

**5.** Produkt nach Anspruch 3, dadurch gekennzeichnet, dass wenigstens einer der Reste R und $R^1$ ein Alkoxy von $C_1$ bis $C_8$ oder ein Benzol- oder Naphthalinacryloxy, das Substituenten tragen kann, ist.

**6.** Produkt nach Anspruch 3, dadurch gekennzeichnet, dass der oder die Reste R und $R^1$ Cycloalkyle oder Cycloalkenyle von $C_4$ bis $C_8$ sind.

**7.** Produkt nach einem der Ansprüche 3 bis 6, dadurch gekennzeichnet, dass $R^2$ und $R^3$, gleich oder verschieden, Alkyle oder Alkenyle von $C_1$ bis $C_{18}$, Aryle, Alkoxyle, Aryloxygruppen, Cycloalkyle oder Cycloalkenyle sind, die von R und $R^1$ verschieden sind.

**8.** Produkt nach einem der Ansprüche 3 bis 7, gekennzeichnet durch die Formel

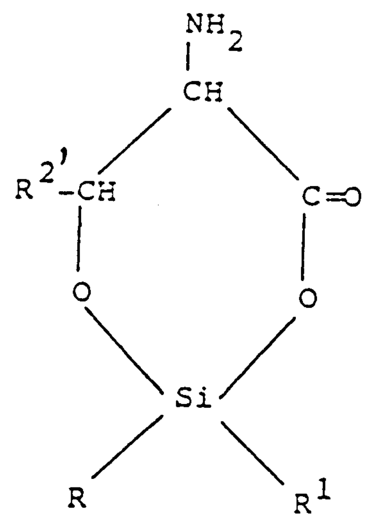

worin jedes von R und $R^1$, gleich oder verschieden, ein Alkyl von $C_1$ bis $C_4$ oder ein Alkoxy von $C_1$ bis $C_4$ ist, wobei $R^{2'}$ H oder Alkyl von $C_1$ bis $C_4$ ist.

**9.** Produkt nach Anspruch 8, dadurch gekennzeichnet, dass es aus der Kondensation von $CH_3Si(OC_2H_5)_3$ mit Serin, Diserin oder Threonin stammt.

**10.** Verfahren zur Herstellung eines Kondensationsprodukts nach einem der Ansprüche 1 bis 9, dadurch gekennzeichnet, dass ein Silanol oder ein Derivat und eine Carbonsäure, die eine oder mehrere OH und $NH_2$ aufweist, zusammen in einem wasserfreien organischen Lösungsmittel unter Zugabe eines Neutralisationsmittels gelöst werden und das Lösungsmittel danach in der Hitze entfernt wird.

**11.** Verfahren nach Anspruch 10, dadurch gekennzeichnet, dass das Lösungsmittel bei einer 150 °C nicht überschreitenden Temperatur siedet und seine Entfernung durch Verdampfung zwischen 50 ° und 100 °C erfolgt, wobei der Protonendonator ein Amin, insbesondere Pyridin, ist.

**12.** Verfahren zur Herstellung eines Produkts nach einem der Ansprüche 1 bis 9, dadurch gekennzeichnet, dass eine organische Siliziumverbindung, die zwei gegen Kationen austauschbare Gruppen oder Atome trägt, in einer wasserfreien organischen Flüssigkeit mit dem Metallsalz einer Carbonsäure, die wenigstens ein OH und wenigstens ein $NH_2$ aufweist, erhitzt wird.

**13.** Verfahren nach Anspruch 12, dadurch gekennzeichnet, dass die Carbonsäure in Form eines Alkalimetallsalzes von Serin, Diserin, Threonin oder Tyrosin vorliegt.